# EUROPEAN PATENT APPLICATION

(11) **EP 2 741 579 A2**
(43) Date of publication of application: **11.06.2014**
(21) Application number: 13156845.3
(22) Date of filing: 26.02.2013
(51) Int. Cl.: H05B 33/08

(54) **Power supply circuit and illumination device**

(30) Priority: 07.12.2012 JP 2012268839
(71) Applicant: Toshiba Lighting & Technology Corporation, Yokosuka-shi Kanagawa 237-8510 (JP)
(72) Inventor: Kato, Go, Kanagawa 237-8510 (JP); Otake, Hirokazu, Kanagawa 237-8510 (JP); Kitamura, Noriyuki, Kanagawa 237-8510 (JP); Nakamura, Hiroto, Kanagawa 237-8510 (JP)
(74) Representative: Willquist, Sofia Ellinor

(57) **Abstract**

There is provided a power supply circuit (14) including a power converting unit (20), a control unit (21), and a power supply unit for control (22). The power converting unit (20) converts a conduction angle controlled alternating-current voltage supplied via a power supply path (25) so as to be supplied to a load (12). The control unit (21) detects a conduction angle of the alternating-current voltage and controls conversion of a voltage by the power converting unit (20) according to the detected conduction angle. The power supply unit for control (22) is electrically connected to the power supply path (25) and converts the alternating-current voltage so as to be supplied to the control unit (21).

## Description

### FIELD

Embodiments described herein relate generally to a power supply circuit and an illumination device.

### BACKGROUND

There is a power supply circuit which converts a conduction angle controlled alternating-current voltage into a predetermined voltage so as to be supplied to a load. This power supply circuit is used for an illumination device provided with an illumination load which includes an illumination light source such as, for example, a light emitting diode (LED). The power supply circuit for illumination supplies power to the illumination load and converts a voltage in synchronization with a conduction angle control of a dimmer, thereby dimming the illumination light source. The power supply circuit includes a control unit which detects a conduction angle of an alternating-current voltage and controls voltage conversion according to the detected conduction angle. In this power supply circuit, the control unit is preferably operated stably.

### DESCRIPTION OF THE DRAWINGS

FIG. 1 is a block diagram schematically illustrating an illumination device according to a first embodiment;
FIG. 2 is a circuit diagram schematically illustrating a power supply circuit according to the first embodiment;
FIGS. 3A and 3B are graphs illustrating an operation of a control unit according to the first embodiment;
FIGS. 4A to 4C are graphs illustrating an operation of the control unit;
FIGS. 5A to 5C are graphs illustrating an operation of the control unit;
FIG. 6 is a flowchart illustrating an operation of a control unit according to a second embodiment;
FIG. 7 is a graph illustrating an operation of the control unit;
FIG. 8 is a flowchart illustrating another operation of the control unit;
FIG. 9 is a graph illustrating another operation of the control unit;
FIG. 10 is a flowchart illustrating an operation of a control unit according to a third embodiment;
FIG. 11 is a graph illustrating an operation of the control unit; and
FIG. 12 is a flowchart illustrating another operation of the control unit.

### DETAILED DESCRIPTION

According to an embodiment, there is provided a power supply circuit including a power converting unit, a control unit, and a power supply unit for control. The power converting unit converts a conduction angle controlled alternating-current voltage supplied via a power supply path so as to be supplied to a load. The control unit detects a conduction angle of the alternating-current voltage and controls conversion of a voltage by the power converting unit according to the detected conduction angle. The power supply unit for control is electrically connected to the power supply path and converts the alternating-current voltage so as to be supplied to the control unit.

According to another embodiment, there is provided an illumination device including an illumination load and a power supply circuit. The illumination load includes an illumination light source. The power supply circuit includes a power converting unit, a control unit, and a power supply unit for control. The power converting unit converts a conduction angle controlled alternating-current voltage supplied via a power supply path so as to be supplied to the illumination load. The control unit detects a conduction angle of the alternating-current voltage and controls conversion of a voltage by the power converting unit according to the detected conduction angle. The power supply unit for control is electrically connected to the power supply path and converts the alternating-current voltage so as to be supplied to the control unit.

Hereinafter, each embodiment will be described with reference to the drawings.

In addition, the drawings are schematic and conceptual, and a relationship between the thickness and the width of each part, a ratio of sizes between parts, and the like may not be the same as practical ones. Further, even if the same part is illustrated, there are cases where dimensions or ratios are illustrated so as to be different from each other depending on the drawings.

In addition, in the present specification and the respective drawings, the same constituent element as a constituent element previously described in preceding drawings is given the same reference numeral, and detailed description thereof will be appropriately omitted.

### First Embodiment

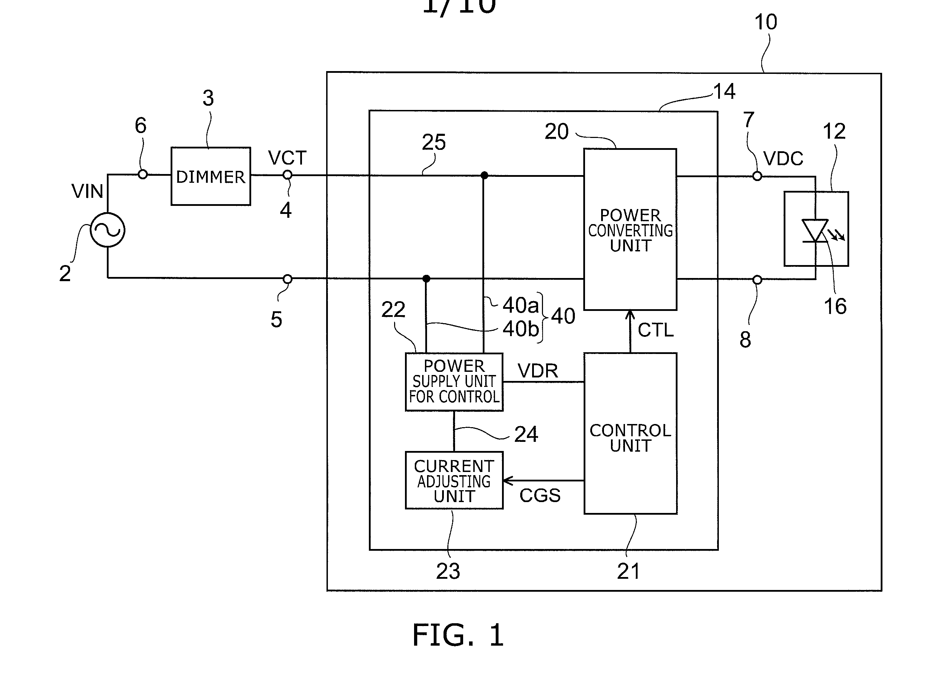

FIG. 1 is a block diagram schematically illustrating an illumination device according to a first embodiment.

As illustrated in FIG. 1, the illumination device 10 includes an illumination load 12 (load) and a power supply circuit 14. The illumination load 12 includes an illumination light source 16 such as, for example, a light emitting diode (LED). The power supply circuit 14 is connected to an alternating-current power supply 2 and a dimmer 3. In addition, in the present specification, the "connection" means an electrical connection, and also includes a case of not being physically connected and a case of being connected via other constituent elements.

The alternating-current power supply 2 is, for example, a commercial power supply. The dimmer 3 generates a conduction angle controlled alternating-current voltage VCT from a power supply voltage VIN of the alternating-current power supply 2. The power supply circuit 14 converts the alternating-current voltage VCT supplied from the dimmer 3 into a direct-current voltage VDC which is output to the illumination load 12, thereby turning on the illumination light source. In addition, the power supply circuit 14 dims the illumination light source 16 in synchronization with the conduction angle controlled alternating-current voltage VCT.

Methods of the conduction angle control used by the dimmer 3 includes, for example, a phase control (leading edge) method in which a conduction phase is controlled during a period time when an absolute value of an alternating-current voltage arrives at the maximum value from a zero cross point of the alternating-current voltage, and an anti-phase control (trailing edge) method in which a blocking phase is controlled during a period time when the alternating-current voltage arrives at the zero cross point after an absolute value of the alternating-current voltage becomes the maximum value.

The dimmer 3 which performs phase control has a simple circuit configuration, and can handle a relatively large power load. However, if a triac is used, a light load operation is difficult, and thereby a so-called power supply dip occurs in which a power supply voltage temporarily decreases. Therefore, an unstable operation tends to happen. In addition, if a capacitive load is connected, rush current occurs, and thus the dimmer has a feature such as being incompatible with the capacitive load.

On the other hand, the dimmer 3 which performs anti-phase control can be operated even in a light load. Even if a capacitive load is connected, rush current does not occur, and, even if a power supply dip occurs, an operation is stable. However, since a circuit configuration is complex, and the temperature tends to increase, the dimmer is not suitable for a heavy load. In addition, if an inductive load is connected, the dimmer has a feature such as surge occurring.

In the present embodiment, a configuration is exemplified in which the dimmer 3 is inserted in serials between terminals 4 and 6 of a pair of power supply lines which supplies the power supply voltage VIN, but other configurations may be used.

The power supply circuit 14 includes a power converting unit 20, a control unit 21, a power supply unit for control 22, and a current adjusting unit 23. The power converting unit 20 converts the alternating-current voltage VCT supplied via a power supply path 25 into the direct-current voltage VDC with a predetermined voltage value corresponding to the illumination load 12, so as to be supplied to the illumination load 12.

The power supply unit for control 22 includes a wire portion 40 connected to the power supply path 25. The wire portion 40 includes a wire 40a connected to the input terminal 4 and a wire 40b connected to an input terminal 5. The power supply unit for control 22 converts the alternating-current voltage VCT input via the wire portion 40 into a direct-current driving voltage VDR corresponding to the control unit 21, and supplies the driving voltage VDR to the control unit 21.

The current adjusting unit 23 has a branching path 24 which is electrically connected to the power supply path 25, and can switch between a conduction state in which some of currents flowing through the power supply path 25 flow into the branching path 24 and a non-conduction state in which the currents do not flow thereinto. Thereby, the current adjusting unit 23 adjusts, for example, current flowing through the power supply path 25. In this example, the branching path 24 of the current adjusting unit 23 is connected to the power supply path 25 via the power supply unit for control 22. The branching path 24 may be directly connected to the power supply path 25 without using the power supply unit for control 22. In addition, the non-conduction state also includes a case where micro current which does not influence an operation flows through a second branching path 60. The non-conduction state is a state in which, for example, current flowing through the second branching path 60 is smaller than in the conduction state.

The control unit 21 detects a conduction angle of the alternating-current voltage VCT. The control unit 21 generates a control signal CTL corresponding to the detected conduction angle and inputs the control signal CTL to the power converting unit 20. The power converting unit 20 generates a direct-current voltage VDC with a voltage value corresponding to the input control signal CTL. That is to say, the control unit 21 controls the conversion into the direct-current voltage VDC by the power converting unit 20. In addition, the control unit 21 generates a control signal CGS corresponding to the detected conduction angle, and inputs the control signal CGS to the current adjusting unit 23, thereby controlling switching between the conduction state and the non-conduction state of the current adjusting unit 23. In this way, the control unit 21 controls the power converting unit 20 and the current adjusting unit 23 according to a detected conduction angle, thereby dimming the illumination light source 16 in synchronization with the conduction angle control of the dimmer 3. As the control unit 21, for example, a microprocessor is used.

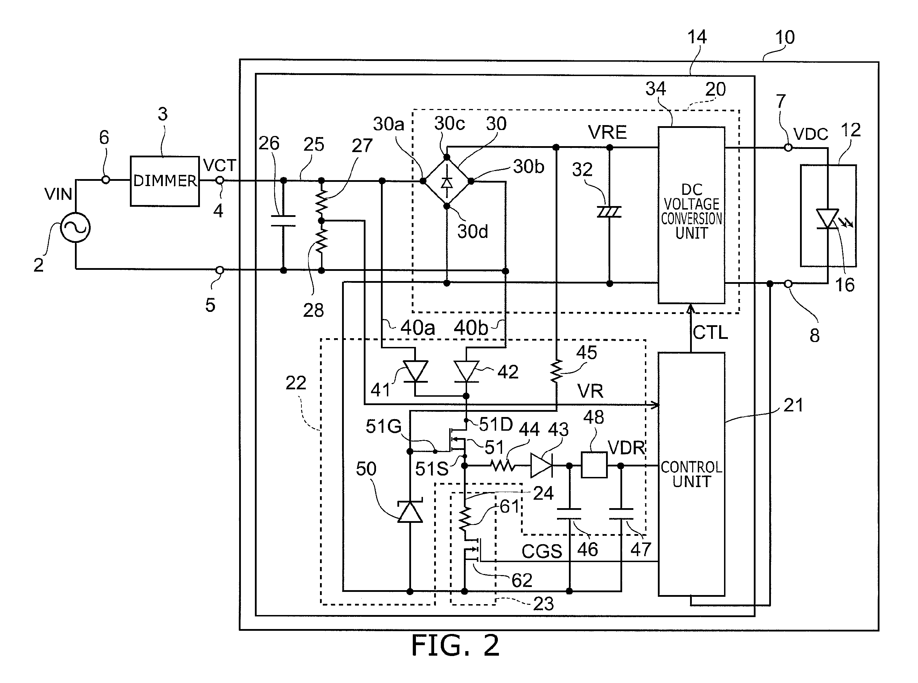

FIG. 2 is a circuit diagram schematically illustrating the power supply circuit according to the first embodiment.

As illustrated in FIG. 2, the power converting unit 20 includes a rectifying circuit 30, a smoothing capacitor 32, and a direct-current voltage conversion unit 34.

The rectifying circuit 30 is constituted by, for example, a diode bridge. Input terminals 30a and 30b of the rectifying circuit 30 are connected to a pair of input terminals 4 and 5. A phase-controlled or anti-phase-controlled alternating-current voltage VCT is input to the input terminals 30a and 30b of the rectifying circuit 30 via the dimmer 3. The rectifying circuit 30 performs full-wave rectification on, for example, the alternating-current voltage VCT, and causes a pulse voltage after the full-wave rectification to occur between a high potential terminal 30c and a low potential terminal 30d.

The smoothing capacitor 32 is connected between the high potential terminal 30c and the low potential terminal 30d of the rectifying circuit 30. The smoothing capacitor 32 smooths the pulse voltage rectified by the rectifying circuit 30. Thereby, a direct-current voltage VRE (a first direct-current voltage) is developed across both ends of the smoothing capacitor 32.

The direct-current voltage conversion unit 34 is connected to both the ends of the smoothing capacitor 32. Thereby, the direct-current voltage VRE is input to the direct-current voltage conversion unit 34. The direct-current voltage conversion unit 34 converts the direct-current voltage VRE into a direct-current voltage VDC (a second direct-current voltage) with a different voltage value and outputs the direct-current voltage VDC to output terminals 7 and 8 of the power supply circuit 14. The illumination load 12 is connected to the output terminals 7 and 8. The illumination load 12 turns on the illumination light source 16 using the direct-current voltage VDC supplied from the power supply circuit 14.

The direct-current voltage conversion unit 34 is connected to the control unit 21. The control unit 21 inputs the control signal CTL to the direct-current voltage conversion unit 34. The direct-current voltage conversion unit 34 decreases the direct-current voltage VRE in response to, for example, the control signal CTL. Thereby, the direct-current voltage conversion unit 34 converts, for example, the direct-current voltage VRE into the direct-current voltage VDC corresponding to a specification of the illumination load 12 or a dimming degree of the dimmer 3.

The direct-current voltage conversion unit 34 has a switching element such as, for example, a FET, and decreases the direct-current voltage VRE by turning on and off the switching element. The control unit 21 inputs, for example, a duty signal for defining turned-on and turned-off timings of the switching element, to the direct-current voltage conversion unit 34 as the control signal CTL. Thereby, a voltage value of the direct-current voltage VDC can be adjusted to a value corresponding to a duty ratio of the control signal CTL. The direct-current voltage conversion unit 34 is, for example, a step-down DC-DC converter.

The power supply circuit 14 further includes a filter capacitor 26 and resistors 27 and 28. The filter capacitor 26 is connected between the input terminals 4 and 5. In other words, the filter capacitor 26 is connected to the power supply path 25. The filter capacitor 26 removes noise included in, for example, the alternating-current voltage VCT.

The resistors 27 and 28 are connected in series between the input terminals 4 and 5. A connection point of the resistors 27 and 28 is connected to the control unit 21. Thereby, a voltage corresponding to a voltage division ratio of the resistors 27 and 28 is input to the control unit 21 as a detection voltage VR for detecting an absolute value of the alternating-current voltage VCT.

The power supply unit for control 22 includes rectifying elements 41 to 43, resistors 44 and 45, capacitors 46 and 47, a regulator 48, a zener diode 50, and a semiconductor element 51.

The rectifying elements 41 and 42 are, for example, diodes. An anode of the rectifying element 41 is connected to one input terminal 30a of the rectifying circuit 30 via the wire 40a. An anode of the rectifying element 42 is connected to the other input terminal 30b of the rectifying circuit 30 via the wire 40b.

For example, a FET or GaN-HEMT is used for the semiconductor element 51. Hereinafter, the semiconductor element 51 will be described as the FET. In this example, the semiconductor element 51 is an enhancement n-channel FET. The semiconductor element 51 includes a source electrode 51S (a first main electrode), a drain electrode 51D (a second main electrode), and a gate electrode 51G (a control electrode). A potential of the drain electrode 51D is set to be higher than a potential of the source electrode 51S. The gate electrode 51G is used to switch between a first state in which a current flows between the source electrode 51S and the drain electrode 51D and a second state in which a current flowing between the source electrode 51S and the drain electrode 51D is smaller than in the first state. In the second state, substantially, a current does not flow between the source electrode 51S and the drain electrode 51D. The semiconductor element 51 may be of a p-channel type or a depletion type. For example, if the semiconductor element 51 is of a p-channel type, the drain electrode 51D becomes a first main electrode, and the source electrode 51S becomes a second main electrode. That is to say, in a case of the p-channel type, a potential of the source electrode 51S is set to be higher than a potential of the drain electrode 51D.

The drain electrode 51D of the semiconductor element 51 is connected to a cathode of the rectifying element 41 and a cathode of the rectifying element 42. In other words, the drain electrode 51D of the semiconductor element 51 is connected to the power supply path 25 via the rectifying elements 41 and 42. The source electrode 51S of the semiconductor element 51 is connected to one end of the resistor 44. The gate electrode 51G of the semiconductor element 51 is connected to a cathode of the zener diode 50. In addition, the gate electrode 51G of the semiconductor element 51 is connected to the high potential terminal 30c which is a high potential side output terminal of the rectifying circuit 30, via the resistor 45.

The other end of the resistor 44 is connected to an anode of the rectifying element 43. A cathode of the rectifying element 43 is connected to one end of the capacitor 46 and one end of the regulator 48. The other end of the regulator 48 is connected to the control unit 21 and one end of the capacitor 47.

When the alternating-current voltage VCT is applied, a current of one polarity flows to the drain electrode 51D of the semiconductor element 51 via the rectifying element 41. On the other hand, when the alternating-current voltage VCT is applied, a current of the other polarity flows to the drain electrode 51D of the semiconductor element 51 via the rectifying element 42. Thereby, a pulse voltage obtained by performing full-wave rectification on the alternating-current voltage VCT is applied to the drain electrode 51D of the semiconductor element 51.

The direct-current voltage VRE which is smoothed by the smoothing capacitor 32 is applied to the cathode of the zener diode 50 via the resistor 45. Thereby, a substantially constant voltage corresponding to a breakdown voltage of the zener diode 50 is applied to the gate electrode 51G of the semiconductor element 51. Thereby, a substantially constant current flows between the drain and the source of the semiconductor element 51. As such, the semiconductor element 51 functions as a constant current element. The semiconductor element 51 adjusts a current flowing through the wire portion 40.

The capacitor 46 smooths the pulse voltage supplied from the source electrode 51S of the semiconductor element 51 via the resistor 44 and the rectifying element 43, so as to convert the pulse voltage into a direct-current voltage. The regulator 48 generates a direct-current driving voltage VDR which is substantially constant from the input direct-current voltage, so as to be output to the control unit 21. The capacitor 47 is used to remove, for example, noise of the driving voltage VDR. Thereby, the driving voltage VDR is supplied to the control unit 21.

At this time, as described above, the drain electrode 51D of the semiconductor element 51 is connected to the power supply path 25, and the gate electrode 51G of the semiconductor element 51 is connected to the high potential terminal 30c of the rectifying circuit 30. In other words, the alternating-current voltage VCT is applied to the drain electrode 51D of the semiconductor element 51, and the direct-current voltage VRE is applied to the gate electrode 51G of the semiconductor element 51. Thereby, for example, an operation of the semiconductor element 51 can be stabilized. A load applied to the rectifying elements 41 and 42 can be suppressed. The stable driving voltage VDR can be supplied to the control unit 21. As a result, an operation of the control unit 21 can be stabilized. In addition, a voltage applied to the drain electrode 51D of the semiconductor element 51 may be a voltage which is not smoothed by the smoothing capacitor 32. For example, a pulse voltage rectified by the rectifying circuit 30 may be used. A voltage applied to the gate electrode 51G of the semiconductor element 51 may be a voltage which is smoothed by the smoothing capacitor 32. For example, the direct-current voltage VDC may be used.

The current adjusting unit 23 includes a resistor 61 and a switching element 62. For example, a FET, GaN-HEMT, or the like is used for the switching element 62. Hereinafter, the switching element 62 will be described as the FET.

One end of the resistor 61 is connected to the source electrode 51S of the semiconductor element 51. The other end of the resistor 61 is connected to a drain of the switching element 62. A gate of the switching element 62 is connected to the control unit 21. The control unit 21 inputs the control signal CGS to the gate of the switching element 62. For example, a normally-off type is used for the switching element 62. For example, the control signal CGS which is input from the control unit 21 is changed from a low level to a high level, and thereby the switching element 62 varies from a turned-off state to a turned-on state.

If the switching element 62 is turned on, some of the currents which flow through the power supply path 25 flow into the branching path 24, for example, via the rectifying elements 41 and 42 and the semiconductor element 51. That is to say, if the switching element 62 is turned on, the current adjusting unit 23 enters a conduction state, and, if the switching element 62 is turned off, the current adjusting unit 23 enters a non-conduction state.

The source of the switching element 62, the anode of the zener diode 50, the other end of the capacitor 46, and the other end of the capacitor 47 are connected to the low potential terminal 30d of the rectifying circuit 30. In other words, the ground of the power supply unit for control 22 and the ground of the current adjusting unit 23 are communized with the input side ground of the direct-current voltage conversion unit 34. On the other hand, the ground of the control unit 21 is connected to the output terminal 8. That is to say, the ground of the control unit 21 is communized with the output side ground of the direct-current voltage conversion unit 34. Thereby, for example, an operation of the control unit 21 can be further stabilized.

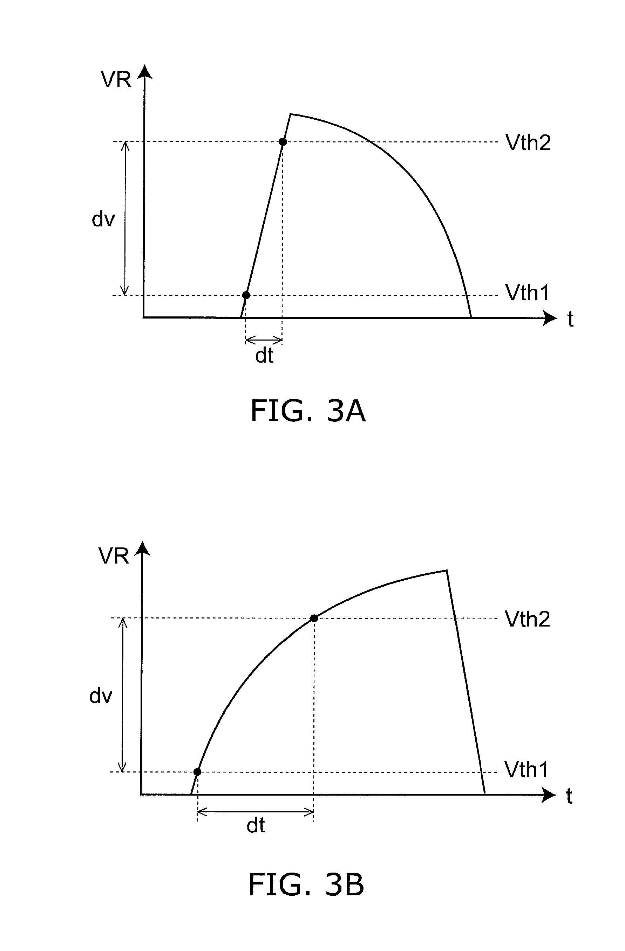

FIGS. 3A and 3B are graphs illustrating an operation of the control unit according to the first embodiment.

The control unit 21 activates in response to supply of the driving voltage VDR from the power supply unit for control 22, and determines a control method used by the dimmer 3 on the basis of the detection voltage VR.

The transverse axis of FIGS. 3A and 3B expresses time t, and the longitudinal axis expresses the detection voltage VR.

FIG. 3A illustrates an example of the waveform of the detection voltage VR when the alternating-current voltage VCT is supplied from the dimmer 3 using a phase control system.

FIG. 3B illustrates an example of the waveform of the detection voltage VR when the alternating-current voltage VCT is supplied from the dimmer 3 using an anti-phase control system.

As illustrated in FIGS. 3A and 3B, the control unit 21 sets a first threshold value voltage Vth1 and a second threshold value voltage Vth2 for the detection voltage VR. An absolute value of the second threshold value voltage Vth2 is greater than an absolute value of the first threshold value voltage Vth1. The control unit 21 measures a time dt from a time point when the detection voltage VR arrives at the first threshold value voltage Vth1 to a time point when the detection voltage VR arrives at the second threshold value voltage Vth2. In addition, the control unit 21 obtains a slope dV/dt from a difference dV between the first threshold value voltage Vth1 and the second threshold value voltage Vth2 and the time dt. The control unit 21 determines whether or not the slope dV/dt is equal to or more than a predetermined value, and, the control unit 21 determines that the phase control system is used if the slope is equal to or more than the predetermined value, and determines that the anti-phase control system is used if the slope is smaller than the predetermined value. In addition, the measurement of the time dt may be performed, for example, using a built-in timer, or a timer which is externally provided.

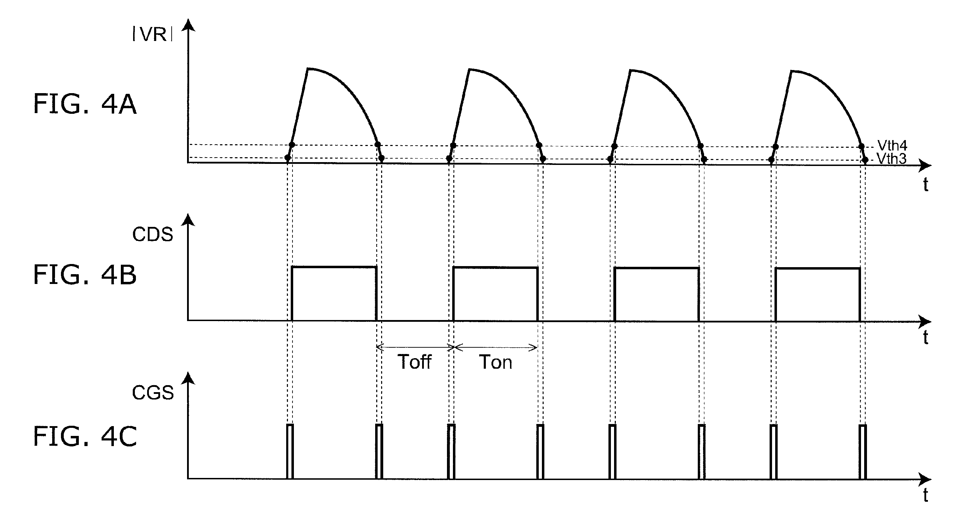

FIGS. 4A to 4C are graphs illustrating an operation of the control unit according to the first embodiment.

The control unit 21 detects a conduction angle of the alternating-current voltage VCT after determining the control method used by the dimmer 3.

FIGS. 4A to 4C illustrate an operation example when the phase control system is determined as being used.

The transverse axis of FIGS. 4A to 4C expresses a time t. The longitudinal axis of FIG. 4A expresses an absolute value of the detection voltage VR. The longitudinal axis of FIG. 4B expresses a conduction angle detection signal CDS. The longitudinal axis of FIG. 4C expresses a control signal CGS.

As illustrated in FIGS. 4A to 4C, the control unit 21 sets a third threshold value voltage Vth3 (a first voltage) and a fourth threshold value voltage Vth4 (a second voltage) for the absolute value of the detection voltage VR. An absolute value of the fourth threshold value voltage Vth4 is greater than an absolute value of the third threshold value voltage Vth3. The third threshold value voltage Vth3 is set, for example, around a ground potential without limit in a range in which detection errors are not generated.

The control unit 21 determines whether or not an absolute value of the detection voltage VR is equal to or greater than the third threshold value voltage Vth3 and determines whether or not the absolute value of the detection voltage VR is equal to or greater than the fourth threshold value voltage Vth4. In response to determining that the absolute value of the detection voltage VR is equal to or greater than the third threshold value voltage Vth3, the control unit 21 switches the control signal CGS from a low level to a high level, thereby turning on the switching element 62. In response to determining that the absolute value of the detection voltage VR is equal to or greater than the fourth threshold value voltage Vth4, the control unit 21 switches the control signal CGS from a high level to a low level, thereby turning off the switching element 62. In addition, in response to determining that the absolute value of the detection voltage VR is equal to or greater than the fourth threshold value voltage Vth4, the control unit 21 switches the conduction angle detection signal CDS from a low level to a high level.

In response to determining that the absolute value of the detection voltage VR is equal to or greater than the fourth threshold value voltage Vth4 and then determining that the absolute value of the detection voltage VR is smaller than the fourth threshold value voltage Vth4, the control unit 21 switches the conduction angle detection signal CDS from a high level to a low level and switches the control signal CGS from a low level to a high level. In addition, in response to determining that the absolute value of the detection voltage VR is smaller than the third threshold value voltage Vth3, the control unit 21 switches the control signal CGS from a high level to a low level.

In this way, the control unit 21 sets the conduction angle detection signal CDS to a high level if the absolute value of the detection voltage VR is equal to or greater than the fourth threshold value voltage Vth4, and sets the conduction angle detection signal CDS to a low level if the absolute value of the detection voltage VR is smaller than the fourth threshold value voltage Vth4.

The control unit 21 determines the interval of a duration Ton when the conduction angle detection signal CDS is set to a high level as being a conduction section of the conduction angle control of the dimmer 3. In addition, the control unit 21 determines the interval of a duration Toff when the conduction angle detection signal CDS is set to a low level as being a interruption section of the conduction angle control of the dimmer 3. Thereby, the control unit 21 detects a conduction angle of the alternating-current voltage VCT from a ratio of the duration Ton and the duration Toff.

After detecting the conduction angle of the alternating-current voltage VCT, the control unit 21 generates the control signal CTL of a duty ratio corresponding to the conduction angle, and inputs the generated control signal CTL to the direct-current voltage conversion unit 34. Thereby, the illumination light source 16 is dimmed depending on the alternating-current voltage VCT of which the conduction angle is controlled in the phase control system. The control unit 21 periodically detects a conduction angle, for example, until the alternating-current voltage VCT stops being supplied. In addition, the detection of a conduction angle may be performed, for example, for each half wave of the alternating-current voltage VCT or every predetermined number of half waves.

In addition, as described above, the control unit 21 sets the control signal CGS to a high level (the current adjusting unit 23 is in a conduction state) if an absolute value of the detection voltage VR is equal to or greater than the third threshold value voltage Vth3 and is smaller than the fourth threshold value voltage Vth4. Further, the control unit 21 sets the control signal CGS to a low level (the current adjusting unit 23 is in a non-conduction state) if an absolute value of the detection voltage VR is smaller than the third threshold value voltage Vth3 and is equal to or greater than the fourth threshold value voltage Vth4.

As above, an operation of the current adjusting unit 23 is controlled, and thereby, for example, the dimmer 3 can be operated stably. For example, charge accumulated in the capacitors 46 and 47 can be extracted to the current adjusting unit 23. Thereby, the driving voltage VDR can be stably supplied to the control unit 21. That is to say, an operation of the control unit 21 can be further stabilized.

For example, a triac is assumed to be used for the dimmer 3 which performs conduction angle control in the phase control system, and an LED is assumed to be used for the illumination light source 16. Current consumption of the LED is lower than current consumption of an incandescent lamp or the like. For this reason, if the above-described operation is not performed, a holding current which is required to turn on the triac cannot be made to flow at a conduction angle equal to or smaller than a predetermined value, and thus an operation of the dimmer 3 may become unstable.

In contrast, in the power supply circuit 14 according to the present embodiment, an operation of the current adjusting unit 23 is controlled as described above, and thereby the holding current required to turn on the triac can be made to flow to the current adjusting unit 23 (the branching path 24) at a conduction angle equal to or smaller than the predetermined value. Thereby, an operation of the dimmer 3 can be stabilized.

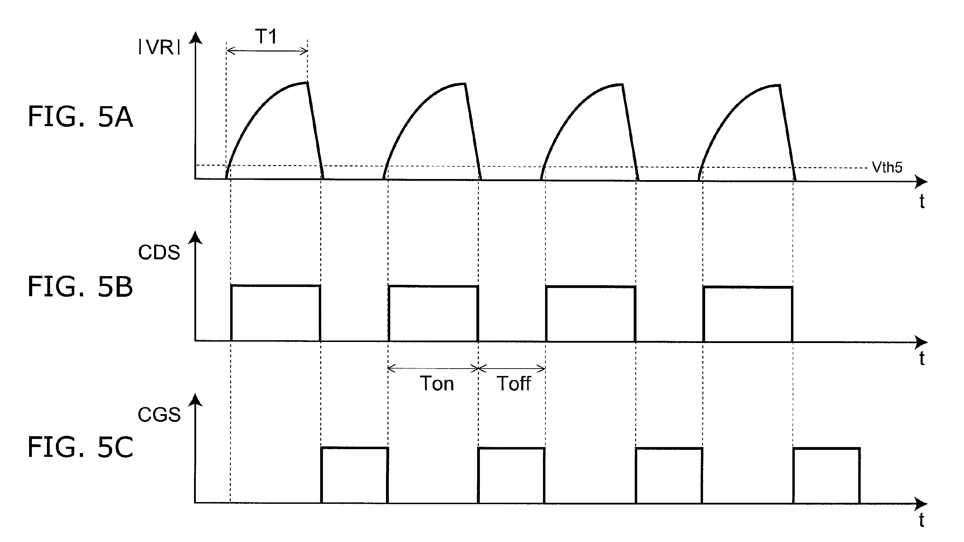

FIGS. 5A to 5C are graphs illustrating an operation of the control unit according to the first embodiment.

FIGS. 5A to 5C illustrate an operation example when the anti-phase control system is determined as being used.

The transverse axis of FIGS. 5A to 5C expresses a time t. The longitudinal axis of FIG. 5A expresses an absolute value of the detection voltage VR. The longitudinal axis of FIG. 5B expresses a conduction angle detection signal CDS. The longitudinal axis of FIG. 5C expresses a control signal CGS.

As illustrated in FIGS. 5A to 5C, the control unit 21 sets a fifth threshold value voltage Vth5 for the absolute value of the detection voltage VR. In addition, the control unit 21 determines whether or not an absolute value of the detection voltage VR is equal to or greater than the fifth threshold value voltage Vth5.

The control unit 21 sets the conduction angle detection signal CDS to a high level if the absolute value of the detection voltage VR is equal to or greater than the fifth threshold value voltage Vth5, and sets the conduction angle detection signal CDS to a low level if the absolute value of the detection voltage VR is smaller than the fifth threshold value voltage Vth5. In addition, in the same manner as in the phase control system, the control unit 21 determines the interval of the duration Ton when the conduction angle detection signal CDS is set to a high level as being a conduction section of the conduction angle control of the dimmer 3, and determines the interval of the duration Toff when the conduction angle detection signal CDS is set to a low level as being a interruption section of the conduction angle control of the dimmer 3, thereby detecting a conduction angle of the alternating-current voltage VCT from a ratio of the duration Ton and the duration Toff.

The control unit 21 generates the control signal CTL of a duty ratio corresponding to a detected conduction angle, and inputs the generated control signal CTL to the direct-current voltage conversion unit 34. Thereby, the illumination light source 16 can be dimmed depending on the alternating-current voltage VCT in the anti-phase control system as well.

In addition, in response to switching of the conduction angle detection signal CDS from a high level to a low level, the control unit 21 switches the control signal CGS from a low level to a high level, thereby turning on the switching element 62. Further, in response to switching of the conduction angle detection signal CDS from a low level to a high level according to inputting of a subsequent half wave, the control unit 21 switches the control signal CGS from a high level to a low level, thereby turning off the switching element 62. In other words, the control unit 21 makes the current adjusting unit 23 enter a non-conduction state in a conduction section of the detected conduction angle, and makes the current adjusting unit 23 enter a conduction state in a interruption section of the detected conduction angle.

In the anti-phase control system, there are cases where the duration Ton is longer than a duration T1 of the actual conduction section of the dimmer 3 by influence of charge accumulated in the filter capacitor 26. If the duration Ton is longer than the duration T1, for example, a duty ratio of the control signal CTL varies, and thus a dimming degree of the illumination light source 16 varies.

The current adjusting unit 23 is in a conduction state, and some of the currents flowing through the power supply path 25 flow into the branching path 24, thereby extracting the charge accumulated in the filter capacitor 26 to the current adjusting unit 23. Thereby, the power supply circuit 14 can reliably detect a conduction angle of the anti-phased-controlled alternating-current voltage VCT. The illumination light source 16 can be dimmed with higher accuracy.

There is a configuration in which a rectified voltage or a voltage converted by the direct-current voltage conversion unit 34 is used for a power supply of the control unit 21. In this configuration, since power supplied to the control unit 21 is reduced when dimming is performed, if the voltage becomes equal to or smaller than an operation voltage of a component forming the control unit 21, the control unit 21 stops and thus an operation of the power supply circuit 14 becomes unstable.

In contrast, in the power supply circuit 14 according to the present embodiment, the power supply unit for control 22 is connected to the power supply path 25, and supply of a current to the semiconductor element 51 is performed from the interval when the alternating-current voltage VCT is conducted. Thereby, power can be supplied to the control unit 21 regardless of a dimming level. In other words, the control unit 21 can be operated stably.

### Second Embodiment

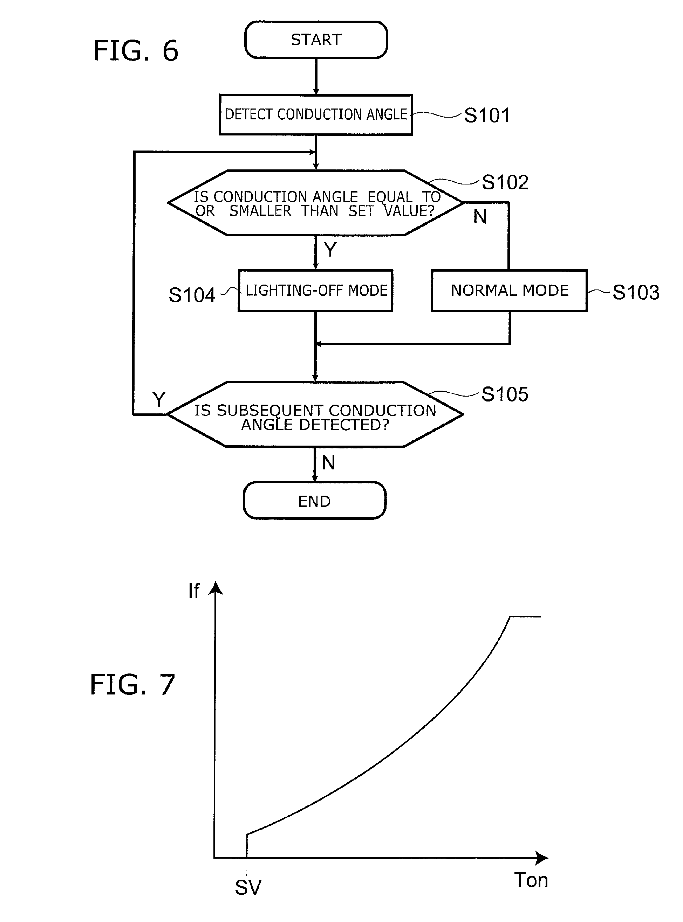

FIG. 6 is a flowchart illustrating an operation of a control unit according to a second embodiment.

FIG. 7 is a graph illustrating an operation of the control unit according to the second embodiment.

The transverse axis of FIG. 7 expresses a duration Ton (a duration of a detected conduction section) when the conduction angle detection signal CDS is set to a high level, and the longitudinal axis thereof expresses a current If supplied to the illumination load 12.

As illustrated in FIGS. 6 and 7, in this example, the control unit 21 detects a conduction angle and then determines whether or not the detected conduction angle is equal to or smaller than a set value SV (ACT 101 and ACT 102). The set value SV is set to, for example, about 5% to 10% of the total. In other words, the set value SV is about 10° to 20°.

If the detected conduction angle is determined as being greater than the set value SV, the control unit 21 operates in a normal mode in which the power converting unit 20 and the current adjusting unit 23 are controlled according to the detected conduction angle as described in the first embodiment (ACT 103).

On the other hand, if the conduction angle is determined as being equal to or smaller than the set value SV, the control unit 21 operates in a lighting-off mode in which power stops being supplied from the power converting unit 20 to the illumination load 12 (ACT 104). In other words, the control unit 21 turns off the illumination light source 16 if the detected conduction angle is equal to or smaller than the set value SV. In the following, the control unit 21 repeatedly performs the above-described processes each time a subsequent conduction angle is detected (ACT 105).

The dimming control in the power supply circuit 14 becomes unstable according to a reduced dimming rate. For example, flickering or the like of the illumination light source 16 occurs in a range of a low dimming rate. For this reason, a lower limit value of the dimming rate corresponding to the product of the illumination device 10 is set in the dimmer 3. However, if the illumination device 10 with a lower limit value different from the lower limit value set in the dimmer 3 is connected, the lower limit value of the dimmer 3 may be lower than the lower limit value of the illumination device 10. In this case, there is a possibility that flickering or the like may occur.

In contrast, in the power supply circuit 14 according to the present embodiment, the control unit 21 determines whether or not a detected conduction angle is equal to or smaller than the set value SV, and stops supplying power to the load if the detected conduction angle is equal to or smaller than the set value SV. Thereby, a lower limit value of a dimming rate can be set regardless of the dimmer 3. Power can be more appropriately suppressed from being supplied in an unstable operation range. Flickering or the like of the illumination light source 16 can be more appropriately suppressed.

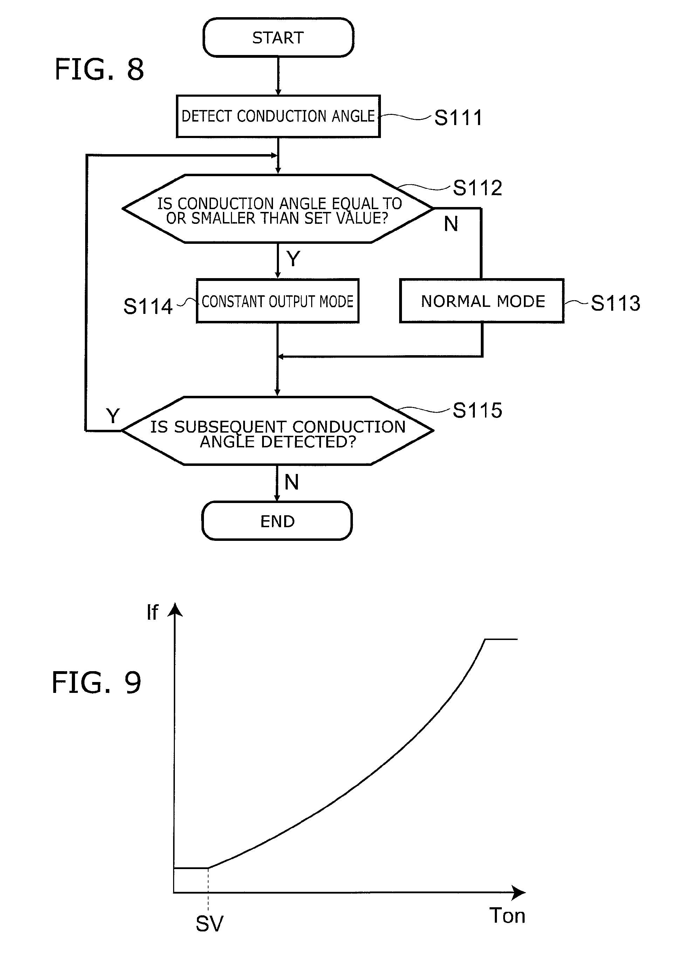

FIG. 8 is a flowchart illustrating another operation of the control unit according to the second embodiment.

FIG. 9 is a graph illustrating another operation of the control unit according to the second embodiment.

The transverse axis of FIG. 9 expresses a duration Ton when the conduction angle detection signal CDS is set to a high level, and the longitudinal axis thereof expresses a current If supplied to the illumination load 12.

As illustrated in FIGS. 8 and 9, in this example, the control unit 21 detects a conduction angle and then determines whether or not the detected conduction angle is equal to or smaller than a set value SV (ACT 111 and ACT 112). If the detected conduction angle is determined as being larger than the set value SV, the control unit 21 operates in a normal mode as described above (ACT 113). On the other hand, if the detected conduction angle is determined as being equal to or smaller than the set value SV, the control unit 21 operates in a constant output mode (ACT 114). In the following, the control unit 21 repeatedly performs the above-described processes each time a subsequent conduction angle is detected (ACT 115).

In the constant output mode, the control unit 21 causes power supplied from the power converting unit 20 to the illumination load 12 not to be equal to or smaller than a predetermined value. For example, in a range in which the detected conduction angle is equal to or smaller than the set value SV, the control unit 21 causes power supplied from the power converting unit 20 to the illumination load 12 to be substantially constant as the predetermined value. That is to say, the control unit 21 maintains a dimming rate of the illumination light source 16 to be substantially constant in the range in which the detected conduction angle is equal to or smaller than the set value SV. In addition, the predetermined value of power set in the constant output mode is a power value corresponding to the set value SV of a conduction angle.

In this way, if the detected conduction angle is determined as being equal to or smaller than the set value SV, power supplied from the power converting unit 20 to the illumination load 12 is made not to be equal to or smaller than a lower limit value, and thereby power can be appropriately suppressed from being supplied in an unstable operation range. Flickering or the like of the illumination light source 16 can be appropriately suppressed.

### Third Embodiment

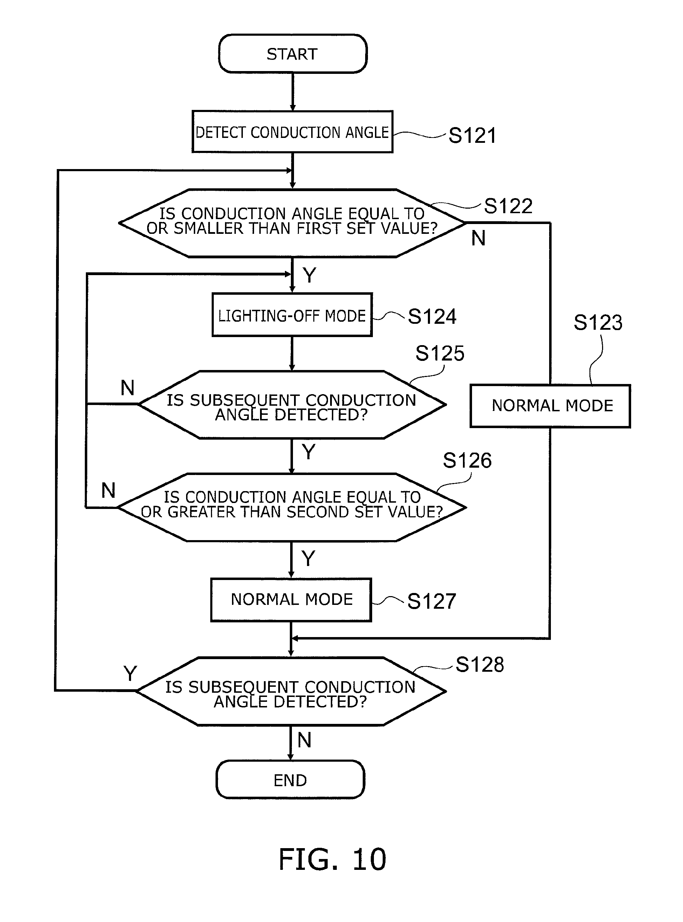

FIG. 10 is a flowchart illustrating an operation of a control unit according to a third embodiment.

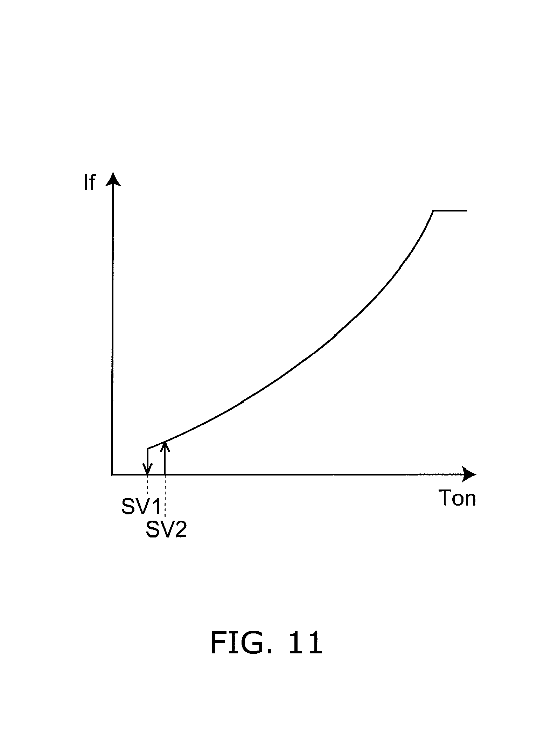

FIG. 11 is a graph illustrating an operation of the control unit according to the third embodiment.

The transverse axis of FIG. 11 expresses a duration Ton when the conduction angle detection signal CDS is set to a high level, and the longitudinal axis thereof expresses a current If supplied to the illumination load 12.

As illustrated in FIGS. 10 and 11, in this example, the control unit 21 detects a conduction angle and then determines whether or not the detected conduction angle is equal to or smaller than a first set value SV1 (ACT 121 and ACT 122) . If the detected conduction angle is determined as being larger than the first set value SV1, the control unit 21 operates in a normal mode (ACT 123).

On the other hand, if the detected conduction angle is determined as being equal to or smaller than the first set value SV1, the control unit 21 operates in a lighting-off mode (ACT 124). If the control unit 21 detects a subsequent conduction angle in a state of operating in the lighting-off mode, the control unit 21 determines whether or not the detected conduction angle is equal to or more than a second set value SV2 (ACT 125 and ACT 126). Here, a value of the second set value SV2 is greater than a value of the first set value SV1.

If the detected conduction angle is determined as being smaller than the second set value SV2, the control unit 21 continuously operates in the lighting-off mode. On the other hand, if the detected conduction angle is determined as being equal to or more than the second set value SV2, the control unit 21 transfers to the operation in the normal mode, and turns on the illumination light source 16 by controlling the power converting unit 20 and the current adjusting unit 23 according to the detected conduction angle (ACT 127). In the following, the control unit 21 repeatedly performs the above-described processes each time a subsequent conduction angle is detected (ACT 128).

As described above, the control unit 21 sets different conduction angles in a case of switching from the normal mode to the lighting-off mode and a case of switching from the lighting-off mode to the lighting-on mode. In other words, the control unit 21 is provided with a dead zone between the first set value SV1 and the second set value SV2. Thereby, for example, if a conduction angle varies due to a variation in the input alternating-current voltage VCT or a value of the detected conduction angle is substantially the same as the set value, turning-on and turning-off of the illumination light source 16 can be suppressed from being repeated.

Although, in this example, the second set value SV2 when the lighting-off mode is switched to the lighting-on mode is greater than the first set value SV1 when the lighting-on mode is switched to the lighting-off mode, conversely, the first set value SV1 when the lighting-on mode is switched to the lighting-off mode may be greater than the second set value SV2 when the lighting-off mode is switched to the lighting-on mode.

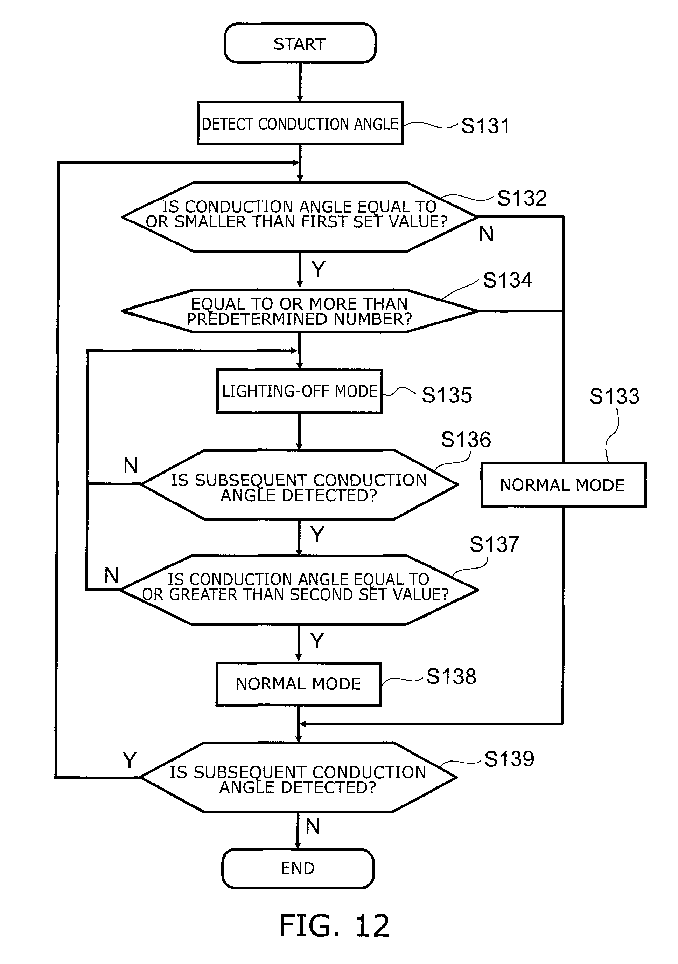

FIG. 12 is a flowchart illustrating another operation of the control unit according to the third embodiment.

As illustrated in FIG. 12, in this example, if a conduction angle is detected, and the detected conduction angle is determined as being larger than the first set value SV1, the control unit 21 operates in the normal mode as described above (ACT 131 to ACT 133).

On the other hand, if the detected conduction angle is determined as being equal to or smaller than the first set value SV1, the control unit 21 determines whether or not the number of determinations of being equal to or smaller than the first set value SV1 is equal to or more than a predetermined number (ACT 134). The predetermined number is, for example, approximately 10 to 20.

If the number of determinations is determined as being less than the predetermined number, the control unit 21 operates in the normal mode. On the other hand, if the number of determinations is determined as being equal to or more than the predetermined number, the control unit 21 operates in the lighting-off mode (ACT 135). After transferring to the lighting-off mode, the control unit 21 determines whether or not a subsequent conduction angle is detected, determines whether or not the detected conduction angle is equal to or more than the second set value SV2, and transfers to the operation in the normal mode, and repeatedly performs the above-described processes each time a subsequent conduction angle is detected, in the same manner as described above (ACT 136 to ACT 139).

As above, in this example, the control unit 21 determines whether or not the number of determinations of being equal to or smaller than the first set value SV1 is equal to or more than the predetermined number, and transfers to the lighting-off mode if the number of determinations is equal to or more than the predetermined number. Thereby, the control unit 21 can be suppressed from temporarily transferring to the lighting-off mode, for example, due to occurrence of a power supply dip or the like. That is to say, the illumination light source 16 can be suppressed from blinking due to the occurrence of the power supply dip. For example, the illumination light source 16 can be prevent from not being turned on after being turned off in a state in which the control unit 21 transfers to the lighting-off mode due to a temporary voltage variation. In this way, influence of the power supply dip can be suppressed.

Although, in the example, after whether or not a detected conduction angle is equal to or smaller than the first set value SV1 is determined, whether or not the number of determinations is equal to or more than a predetermined number is determined, the present embodiment is not limited thereto, and, for example, in the configuration illustrated in FIG. 6, after whether or not the detected conduction angle is equal to or smaller than the set value SV (ACT 102) is determined, whether or not the number of determinations is equal to or more than a predetermined number may be determined. In other words, in the configuration in which the dead zone is not provided, whether or not to be equal to or more than the predetermined number may be determined. In addition, in the configuration illustrated in FIG. 8, after whether or not the detected conduction angle is equal to or smaller than the set value SV (ACT 112) is determined, whether or not the number of determinations is equal to or more than the predetermined number may be determined.

As above, although the embodiments have been described with reference to the detailed examples, the embodiments are not limited thereto and may be variously modified.

For example, although, in the embodiments, the illumination load 12 has been described as a load, the embodiments are not limited thereto, and, any load which requires conduction angle control such as, for example, a heater, may be used. Although, in the embodiments, the power supply circuit 14 used for the illumination device 10 has been described as a power supply circuit, the embodiments are not limited thereto, and any power supply circuit corresponding to a load requiring conduction angle control may be used. A voltage converted by the power converting unit 20 is not limited to a direct-current voltage, and may be an alternating-current voltage with different effective values or a pulse voltage. A voltage converted by the power converting unit 20 may be set, for example, according to a connected load.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14) comprising:
a power converting unit (20) configured to convert a conduction angle controlled alternating-current voltage supplied via a power supply path (25) and supply a converted voltage to a load (12);
a control unit (21) configured to detect a conduction angle of the alternating-current voltage and control the conversion of the voltage by the power converting unit (20) according to the detected conduction angle; and
a power supply unit for control (22) electrically connected to the power supply path (25) and configured to convert the alternating-current voltage and supply a converted voltage to the control unit (21).

2. The circuit (14) according to claim 1, wherein the load (12) is an illumination load including an illumination light source (16),
the alternating-current voltage is supplied from a dimmer (3), and
the control unit (21) controls the power converting unit (20) according to the detected conduction angle, and dims the illumination light source (16) in synchronization with conduction angle control of the dimmer (3).

3. The circuit (14) according to any of claims 1 and 2, wherein the power converting unit (20) includes
a rectifying circuit (30) rectifying the alternating-current voltage;
a smoothing capacitor (32) smoothing the rectified voltage and converting the rectified voltage to a first direct-current voltage; and
a direct-current voltage conversion unit (34) converting the first direct-current voltage to a second direct-current voltage with a different voltage value,
the power supply unit (22) for control includes
a wire portion (40) electrically connected to the power supply path (25); and
a semiconductor element (51) adjusting a current flowing through the wire portion (40),
the semiconductor element (51) includes
a first main electrode (51S);
a second main electrode (51D) set to potential higher than potential of the first main electrode (51S); and
a control electrode (51G) for switching a first state in which an electric current flows between the first main electrode and the second main electrode and a second state in which an electric current flowing between the first main electrode (51S) and the second main electrode (51D) is smaller than the electric current in the first state,
a voltage which is not smoothed by the smoothing capacitor (32) is applied to the second main electrode (51D), and
a voltage which is smoothed by the smoothing capacitor (32) is applied to the control electrode (51G).

4. The circuit (14) according to claim 3, wherein the power supply unit for control (22) further includes
a capacitor (47) electrically connected between the first main electrode (51S) and a ground.

5. The circuit (14) according to any of claims 3 and 4, wherein the ground of the power supply unit for control (22) is communized with an input side ground of the direct-current voltage conversion unit (34), and
a ground of the control unit (21) is communized with an output side ground of the direct-current voltage conversion unit (34).

6. The circuit (14) according to any of claims 1-5, further comprising:
a current adjusting unit (23) including a branching path (24) electrically connected to the power supply path (25), the current adjusting unit (23) being capable of switching a conduction state in which a part of an electric current flowing to the power supply path (25) is fed to the branching path (24) and a non-conduction state in which the electric current is not fed to the branching path (24),
a detection voltage for detecting an absolute value of the alternating-current voltage is input to the control unit (21), and
the control unit (21) determines whether conduction angle control for the alternating-current voltage is a phase control system and, if determining that the conduction angle control is the phase control system, controls the current adjusting unit (23) on the basis of a first voltage and a second voltage larger than the first voltage, if an absolute value of the detection voltage is equal to or higher than the first voltage and smaller than the second voltage, sets the current adjusting unit (23) in the conduction state, and, if the absolute value of the detection voltage is lower than the first voltage and if the absolute value of the detection voltage is equal to or higher than the second voltage, sets the current adjusting unit (23) in the non-conduction state.

7. The circuit (14) according to claim 6, wherein the control unit (21) determines whether conduction angle control for the alternating-current voltage is an anti-phase control system and, if determining that the conduction angle control is the anti-phase control system, sets the current adjusting unit (23) in the non-conduction state in a conduction section of the detected conduction angle and sets the current adjusting unit (23) in the conduction state in an interruption section of the detected conduction angle.

8. The circuit (14) according to claim 7, further comprising:
a capacitor (26) electrically connected to the power supply path (25).

9. The circuit (14) according to any of claims 6-8, wherein the current adjusting unit (23) includes a switching element (62), and
the control unit (21) sets the current adjusting unit (23) in the conduction state by turning on the switching element (62), and sets the current adjusting unit (23) in the non-conduction state by turning off the switching element (62).

10. The circuit (14) according to any of claims 1-9, wherein the control unit (21) detects the conduction angle and determines whether or not the detected conduction angle is equal to or smaller than a set value, and, when the detected conduction angle is determined as being equal to or smaller than the set value, the control unit (21) stops supply of power from the power converting unit (20) to the load (12).

11. The circuit (14) according to any of claims 1-9, wherein the control unit (21) detects the conduction angle and determines whether or not the detected conduction angle is equal to or smaller than a set value, and, when the detected conduction angle is determined as being equal to or smaller than the set value, the control unit (21) causes power supplied from the power converting unit (20) to the load (12) not to be equal to or smaller than a predetermined value.

12. The circuit (14) according to any of claims 1-9, wherein the control unit (21) includes a first state for controlling the power converting unit (20) according to the detected conduction angle and a second state for stopping supply of power from the power converting unit (20) to the load (12), operates in the second state if the detected conduction angle is equal to or smaller than a first set value, and operates in the first state if the detected conduction angle is equal to or greater than a second set value different from the first set value.

13. The circuit (14) according to claim 12, wherein the second set value is greater than the first set value.

14. The circuit (14) according to any of claims 12 and 13, wherein
the control unit (21) detects the conduction angle and determines whether or not the detected conduction angle is equal to or smaller than the first set value,
the control unit determines whether or not the number of determinations of being equal to or smaller than the first set value is equal to or more than a predetermined number when the detected conduction angle is determined as being equal to or smaller than the first set value, and
the control unit operates in the second state when the number of determinations is determined as being equal to or more than the predetermined number.

15. An illumination device (10) comprising:
an illumination load (12) including an illumination light source (16); and
a power supply circuit (14) including
a power converting unit (20) configured to convert a conduction angle controlled alternating-current voltage supplied via a power supply path (25) and supply a converted voltage to the illumination load (12);
a control unit (21) configured to detect a conduction angle of the alternating-current voltage and control the conversion of the voltage by the power converting unit (20) according to the detected conduction angle; and
a power supply unit for control (22) electrically connected to the power supply path (25) and configured to convert the alternating-current voltage and supply a converted voltage to the control unit (21).
